# EUROPÄISCHE PATENTSCHRIFT

(11) **EP 2 139 426 B1**
(45) Veröffentlichungstag und Bekanntmachung des Hinweises auf die Patenterteilung: **25.02.2015**
(21) Anmeldenummer: 08734627.6
(22) Anmeldetag: 15.03.2008
(51) Int. Cl.: A61C 8/00

(54) **DENTALIMPLANTAT**
DENTAL IMPLANT
IMPLANT DENTAIRE

(30) Priorität: 19.03.2007 DE 102007013703
(43) Veröffentlichungstag der Anmeldung: 06.01.2010
(73) Patentinhaber: MDI Dental- und Implantattechnik GmbH, 47057 Duisburg (DE)
(72) Erfinder: GIESELMANN, Dirk-Rolf, CH-8001 Zürich (CH); CESCHINSKI, Harald, 44789 Bochum (DE)
(74) Vertreter: Thiel, Christian
(86) Internationale Anmeldenummer: PCT/EP2008/002089
(87) Internationale Veröffentlichungsnummer: WO 2008/113532

(56) Entgegenhaltungen:
- WO-A-02/26154
- DE-A1- 4 326 841
- US-A- 5 282 746

## Beschreibung

Die Erfindung betrifft ein Implantat zur Verankerung von Zahnersatz im Kiefer eines Patienten, mit einem Grundkörper und einem an dessen Oberseite anschließenden Pfosten, wobei der Pfosten form- und kraftschlüssig in eine Aufnahmeöffnung des Grundkörpers eingreift und mit diesem fest verbindbar ist.

Ein derartigen Implantat ist aus der US-A-5, 282, 746 bekannt.

Bei Verlust eines oder mehrer natürlicher Zähne werden heutzutage Zahnimplantate eingesetzt, die eine Verankerungsmöglichkeit für Zahnersatz, wie Kronen, Brücken oder Prothesen, darstellen. Zahnimplantate sind in diesem Sinne im Kieferknochen verankerte Stützpfeiler, die die Funktion einer künstlichen Zahnwurzel haben. Es handelt sich um festsitzende Elemente, die in den entsprechenden Kieferknochen implantiert werden. Sie ermöglichen sowohl das Einsetzen einzelner Zähne als auch das Einsetzen von Brücken, ohne dass dabei gesunde Nachbarzähne bearbeitet werden müssen. Bei der Implantation werden Zahnimplantate fest in einer zuvor aufgearbeiteten Zahnwurzelkavität im Kieferknochen durch Einpressen oder Einschrauben verankert. Dabei besteht das Implantat in der Regel aus mehreren Teilen, nämlich einem Grundkörper, der die eigentliche Verankerung darstellt, einem Pfosten, der in den Grundkörper eingreift und die Krone bzw. Brücke oder Prothese trägt, und einem Befestigungsmittel, mit dem der Pfosten am Grundkörper festgelegt wird.

Bei einer häufig verwendeten Form von Implantaten wird der Pfosten mittels einer Fixierschraube, die durch den hohlen Pfosten hindurchragt, in der entsprechenden Aufnahme des Grundkörpers fixiert. Dabei weist der Pfosten beispielsweise einen dem Grundkörper zugewandten sechseckigen Abschnitt auf, der sich passgenau in eine sechseckige Kontur der Aufnahmeöffnung des Grundkörpers einpasst. Zusätzlich weist der Pfosten im Bereich seiner Kontaktflächen mit dem Grundkörper eine Schulter auf, die mit einem entsprechenden Abschluss an der Oberseite des Grundkörpers zusammenwirkt. Dabei kommt es darauf an, dass eine möglichst spaltfreie Verbindung zwischen Grundkörper und Pfosten entsteht, um das Eindringen von Bakterien zu verhindern. Ein solches "Gap-Free-Interface" wird allgemein als notwenig erachtet, um unerwünschte Folgen einer Implantation, die so genannte Perioimplantitis, zu verhindern. Eine Perioimplantitis kann dazu führen, dass das Implantat seinen Halt im Kieferknochen verliert.

Es sind verschiedene Dentalimplantate mit "Gap-Free-Interface" aus dem Stand der Technik bekannt. Die vorbekannten Dentalimplantate sind teilweise hinsichtlich ihrer Widerstandsfähigkeit gegen die erheblichen Druckbelastungen, denen Zähne ausgesetzt sind, nicht zufrieden stellend. Bei einer nicht einwandfreien Verbindung zwischen Pfosten und Grundkörper kann es zu Schäden am Implantat kommen, die zu Mikrobewegungen, zu einer Lockerung des Pfostens oder sogar zu einer Beschädigung des Grundkörpers und somit mittelfristig zur Funktionsunfähigkeit des Implantats führen. Eine Lockerung der Verbindung zwischen Pfosten und Grundkörper kann wiederum zur Folge haben, dass Bakterien in den sich zwischen Grundkörper und Pfosten ausbildenden Spalt eindringen, woraus die oben erwähnte Perioimplantitis resultieren kann.

Vor diesem Hintergrund ist es Aufgabe der Erfindung, ein gegenüber dem Stand der Technik verbessertes Dentalimplantat bereitzustellen.

Diese Aufgabe löst die Erfindung ausgehend von einem Implantat der eingangs angegebenen Art dadurch, dass an der Oberseite des Grundkörpers ein die Aufnahmeöffnung umgebender Dichtungsbund und eine den Dichtungsbund umgebende Ringnut vorgesehen sind, wobei der Pfosten an seiner dem Grundkörper zugewandten Unterseite eine umlaufende Schulter mit einer zu dem Dichtungsbund und der Ringnut komplementären Formgebung aufweist.

Durch die Ausgestaltung des Grundkörpers an dessen Oberseite mit einem Dichtungsbund und einer den Dichtungsbund umgebenden Ringnut wird erreicht, dass die Kontaktfläche zwischen Pfosten und Grundkörper maximiert ist. Die Kontaktfläche setzt sich aus parallel und quer zur Längsrichtung des Implantats verlaufenden Flächenabschnitten zusammen. Aufgrund der Größe der Kontaktfläche ergibt sich eine besonders dichte Verbindung zwischen Pfosten und Grundkörper. Die Ausbildung mit Dichtungsbund und Ringnut hat eine Verlängerung des Wegs von der Implantataußenseite zum Innenraum des Implantats zur Folge, was das Eindringen von Mikroorganismen und die Ausbildung von Bakterienherden in den Hohlräumen des Implantats erschwert. Auf diese Weise wird die Gefahr einer Perioimplantitis deutlich vermindert.

Gleichzeitig erlaubt die erfindungsgemäße Ausgestaltung des Implantats mit Dichtungsbund und Ringnut eine besonders stabile Verbindung von Grundkörper und Pfosten, die dazu in der Lage ist, den beim Kauen auf das Implantat einwirkenden Kräfte sowohl in radialer als auch in axialer Richtung standzuhalten, ohne dass Schäden am Implantat zu befürchten sind. Hierbei ist wesentlich, dass der Pfosten gemäß der Erfindung an seiner dem Grundkörper zugewandten Unterseite eine Formgebung aufweist, die zu der Formgebung des Grundkörpers mit Dichtungsbund und Ringnut komplementär ist. Komplementär bedeutet, dass die beiden zusammenwirkenden Teile Grundkörper und Pfosten formschlüssig ineinander passen.

Bei einer bevorzugten Ausführungsform des erfindungsgemäßen Implantats ist der Dichtungsbund in Längsrichtung des Implantats gesehen im Querschnitt stegförmig ausgebildet und weist eine axial verlaufende innere Wandung und eine dazu im Wesentlichen parallele äußere Wandung auf. Diese Ausbildung des Dichtungsbundes trägt dazu bei, dass die Verbindung zwischen Grundkörper und Pfosten besonders widerstandsfähig gegen radiale Belastungen und Scherbelastungen ist, wie sie üblicherweise beim Kauen auf das Implantat einwirken. Die axial verlaufenden Wandabschnitte sind für die Stabilität hinsichtlich radialer Belastungen und Scherbelastungen von entscheidender Bedeutung. Bei dieser Ausgestaltung hat der Dichtungsbund an seiner Oberseite innenseitig und/oder außenseitig sinnvollerweise jeweils eine umlaufende Anfasung. Diese Anfasung erleichtert das Aufsetzen des Pfostens auf den Grundkörper. Durch die Anfasung ergibt sich eine Selbstführung sowie eine automatische Zentrierung des Pfostens in Bezug auf den Grundkörper.

Eine vorteilhafte Ausgestaltung des erfindungsgemäßen Implantates ergibt sich dadurch, dass der Dichtungsbund an seiner Stirnseite flach ausgebildet ist. Durch die flache Ausbildung des Dichtungsbundes an seiner Stirnseite ergibt sich eine quer zur Längsrichtung des Implantats orientierte Kontaktfläche zwischen Grundkörper und Pfosten. Diese Fläche trägt entscheidend zur Stabilität der Verbindung bei, da über die quer zur Längsrichtung des Implantats orientierte Fläche problemlos die erheblichen Druckkräfte, die beim Kauen in Längsrichtung auf das Implantat einwirken, übertragen werden können.

Gemäß einer weiteren bevorzugten Ausführungsform der Erfindung ist vorgesehen, dass die Ringnut sich zu ihrem Grund hin verjüngt. Besonders vorteilhaft verjüngt sich die Ringnut in Längsrichtung des Implantats gesehen zu ihrem Grund hin konisch. Die sich konisch verjüngende Ausbildung der Ringnut führt zusammenwirkend mit der komplementären Formgebung des Pfostens zu einem Klemmsitz des Pfostens an dem Grundkörper. Der Pfosten kann somit bei der Implantation zunächst auf den Grundkörper aufgesteckt werden. Die konische Ausgestaltung der Ringnut bewirkt, dass der Pfosten zunächst ohne weitere Hilfsmittel an dem Grundkörper hält. Dies ist besonders vorteilhaft, wenn das Implantat in den Oberkieferknochen eingesetzt wird. Aufgrund der selbsthemmenden Klemmverbindung zwischen Pfosten und Grundkörper kann der Pfosten nicht aus dem in den Oberkieferknochen eingesetzten Grundkörper herausfallen. Dies erleichtert die Implantation erheblich. Der Klemmsitz bewirkt außerdem eine weiter verbesserte Dichtung und eine Vermeidung von Mikrospalten zwischen Grundkörper und Pfosten.

Weiterhin ist es vorteilhaft, die Ringnut bei dem erfindungsgemäßen Implantat so auszugestalten, dass sie an ihrem Grund flach ist. Durch die flache Ausgestaltung des Grundes der Ringnut ergibt sich eine weitere quer zur Längserstreckung des Dentalimplantats orientierte Kontaktfläche zwischen Grundkörper und Pfosten. Über diese Fläche können in axialer Richtung auf das Implantat einwirkende Kräfte übertragen werden. Wenn gleichzeitig, wie oben beschrieben, der Dichtungsbund des erfindungsgemäßen Implantats an seiner Oberseite flach ausgebildet ist, weist das Implantat an seiner Oberseite mehrere quer zur Längserstreckung des Implantats verlaufende Kontaktflächen auf, die in Längsrichtung des Implantats voneinander beabstandet sind. Diese Ausgestaltung bewirkt eine weiter gesteigerte Widerstandsfähigkeit des Implantats gegenüber Scherbeanspruchungen.

Bevorzugt ist vorgesehen, dass der Grundkörper des erfindungsgemäßen Implantats an seiner dem Kieferknochen zugewandten äußeren Oberfläche ein Schneidgewinde aufweist. Mittels eines solchen selbstschneidenden Gewindes kann das Dentalimplantat stabil in eine zuvor aufgearbeitete Zahnwurzelkavität im Kieferknochen eingesetzt werden. Besonders bevorzugt ist eine Ausgestaltung, bei welcher das Schneidgewinde einen unteren Abschnitt und einen oberen Abschnitt aufweist, wobei der Kerndurchmesser des Schneidgewindes im unteren Abschnitt kleiner ist als im oberen Abschnitt und wobei die Steigung des Schneidgewindes im unteren Abschnitt größer ist als im oberen Abschnitt. Es zeigt sich, dass bei einer derartigen Ausgestaltung des Schneidgewindes eine optimale Primärstabilisierung des Implantats erreicht wird, wobei Druckkräfte im Übergangsbereich zwischen spongiösem und kortikalem Knochen reduziert werden. Hierzu sollte der Abstand des Übergangs zwischen dem oberen und dem unteren Abschnitt des Schneidgewindes von der Oberseite des Grundkörpers 2 bis 4 mm, vorzugsweise ca. 2,5 mm betragen.

Das erfindungsgemäße Implantat, d. h. der Grundkörper und/oder der Pfosten desselben, bestehen in der Regel aus Titan, beispielsweise Reintitan, oder aus einer Titanlegierung. Titan hat sich als für die Osseointegration geeignetes Material erwiesen. Titan und Knochengewebe sind gut miteinander verträglich, so dass die Osseointegration in der Regel rasch und problemlos voranschreitet.

Andererseits ist die Verträglichkeit von Titanmetall mit Epithelgewebe und gingivalem Bindegewebe weniger gut. Hier kann es zu Verzögerungen des Ein-und Ausheilungsprozesses kommen, sowie zu Komplikationen wie Perioimplantitis und Plaqueakkumulation. Angestrebt ist, dass die Einheilung des gingivalen Teils des Implantats nicht länger in Anspruch nimmt als die Osseointegration. Epithel- und Bindegewebe verträgt sich bekannter Maßen gut mit keramischen Materialien, insbesondere mit Zirkonoxid. Aus diesem Grunde kann es sinnvoll sein, den Grundkörper und/oder den Pfosten bei dem erfindungsgemäßen Dentalimplantat an der Außenseite mit Zirkonoxid zu beschichten, vorzugsweise mit stabilisiertem Zirkonoxid. Besonders bevorzugt ist die Beschichtung des Pfostens des Implantats mit Zirkonoxid. Stabilisiertes Zirkonoxid enthält bis zu 10 Gew.-% Yttriumoxid, um einer Zersetzung durch Feuchtigkeit entgegenzuwirken. Gegebenenfalls kann auch Aluminiumoxid vorhanden sein. Eine Zirkonoxid-Beschichtung kann auf dem Metall des Grundkörpers und/oder des Pfostens bei dem erfindungsgemäßen Dentalimplantat mit guter Haftung angebracht werden, insbesondere durch Kathodenzerstäubung. Bei der Kathodenzerstäubung wird Material von einer Kathode (Target) abgetragen und auf einem Substrat niedergeschlagen. Die Beschichtung erfolgt in einer Vakuumkammer in Gegenwart eines Inertgases, wie z. B. Argon. Beim reaktiven Sputtern kann ein weiteres Gas eingespeist werden, das mit den aus dem Target heraus gelösten Ionen reagiert.

Ein Ausführungsbeispiel der Erfindung wird im Folgenden anhand der Zeichnungen näher erläutert. Es zeigen:
- Fig. 1: Ausführungsbeispiel eines erfindungsgemäßen Dentalimplantats in teilweise geschnittener Draufsicht;
- Fig. 2: ausschnittsweise Querschnittdarstellung des Grundkörpers des erfindungsgemäßen Dentalimplantats im Bereich der Oberseite des Grundkörpers.

Die Zeichnungen zeigen ein Dentalimplantat zur Verankerung von Zahnersatz im Kiefer eines Patienten. Das Implantat umfasst einen Grundkörper 1 und einen an dessen Oberseite anschließenden Pfosten 2. Bei dem dargestellten Ausführungsbeispiel bestehen Grundkörper 1 und Pfosten 2 aus Titan, wobei der Pfosten 2 mit Zirkonoxid beschichtet ist. Daraus resultiert eine hellere Farbe des Pfostens 2.

Der Pfosten 2 greift in eine Aufnahmeöffnung 3 des Grundkörpers 1 ein. Der Pfosten 2 ist mit dem Grundkörper 1 über eine (in den Zeichnungen nicht näher dargestellte) Schraube verbunden, die durch den hohlen Pfosten 2 hindurchragt. Der Schraubenkopf ist an der Oberseite des Pfostens 2 zugänglich.

An der Oberseite des Grundkörpers 1 ist ein die Aufnahmeöffnung 3 umgebender Dichtungsbund 4 vorgesehen. Der Dichtungsbund 4 ist von einer Ringnut 5 umgeben. Der Pfosten 2 weist an seiner dem Grundkörper 1 zugewandten Unterseite eine umlaufende Schulter 6 auf, die zu dem Dichtungsbund 4 und der Ringnut 5 komplementär geformt ist.

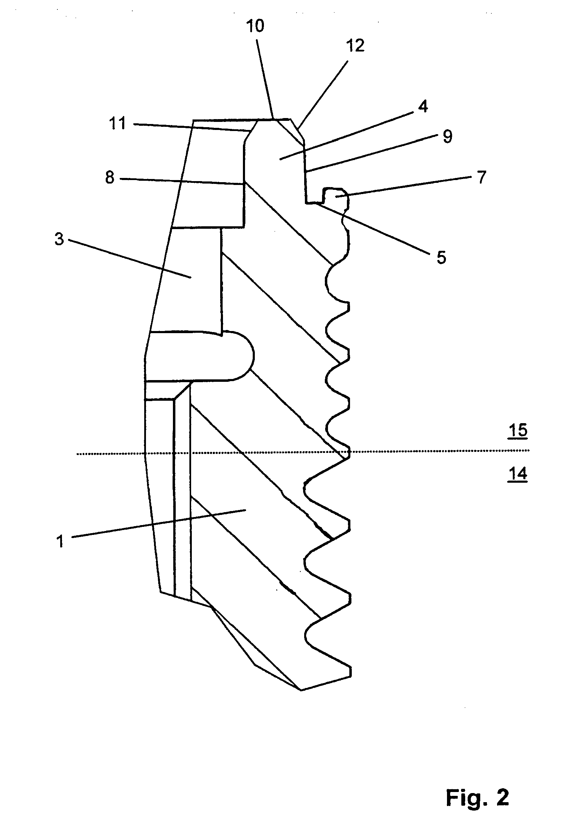

Wie in der Fig. 2 zu erkennen ist, schließt sich in radialer Richtung an die Ringnut 5 unmittelbar ein ringförmiger Vorsprung 7 an. Wenn das erfindungsgemäße Implantat als subgingivales Implantat ausgebildet ist, schließt der in den Kieferknochen implantierte Grundkörper 1 an seiner Oberseite bündig mit dem Kieferknochen ab. Der Vorsprung 7 bewirkt, dass das Material des (in der Fig. 2 nicht dargestellten) Pfostens 2 an der Unterseite des Pfostens 2 nach innen versetzt ist. Die Oberfläche des Pfostens 2 kommt somit nicht mit dem Knochen in Kontakt. Dadurch wird verhindert, dass sich der Knochen im Übergangsbereich zwischen Grundkörper 1 und Pfosten 2 abbaut.

Bei dem in den Zeichnungen dargestellten Ausführungsbeispiel ist der Dichtungsbund 4 in Längsrichtung des Implantats gesehen im Querschnitt stegförmig ausgebildet und weist eine axial verlaufende innere Wandung 8 und eine dazu annähernd parallele äußere Wandung 9 auf. Der Dichtungsbund 4 ist an seiner Stirnseite 10 flach ausgebildet, so dass sich eine quer zur Längsrichtung des Implantats verlaufende Kontaktfläche zwischen Grundkörper 1 und Pfosten 2 ergibt. Innenseitig und außenseitig, d. h. im Übergangsbereich zwischen der Wandung 8 und der Stirnseite 10 bzw. zwischen der Wandung 9 und der Stirnseite 10, weist der Dichtungsbund 4 jeweils eine umlaufende Anfasung 11 bzw. 12 auf, wie in der Fig. 2 gut zu erkennen ist.

Die Ringnut 5 verjüngt sich zu ihrem Grund hin konisch, wobei die Ringnut 5 an ihrem Grund flach ausgebildet ist. Durch die konische Verjüngung der Ringnut 5 und durch die dazu komplementäre Ausgestaltung des Pfostens 2 ergibt sich ein Klemmsitz zwischen Pfosten 2 und Grundkörper 1. Dadurch wird ein klemmender Dichtsitz zwischen Grundkörper 1 und Pfosten 2 erreicht, der einen Übertritt von Mikroorganismen im Kontaktbereich zwischen Grundkörper 1 und Pfosten 2 wirksam verhindert.

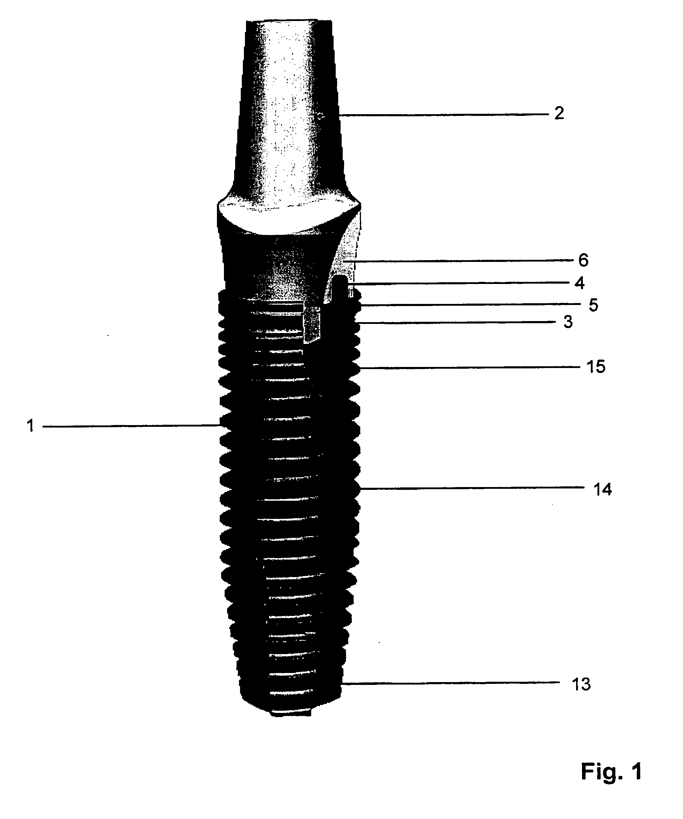

Wie in der Fig. 1 zu erkennen ist, weist der Grundkörper 1 an seiner dem Kieferknochen zugewandten äußeren Oberfläche ein Schneidgewinde auf. An der Unterseite des Grundkörpers 1 sind speziell geformte Schneidkanten 13 vorgesehen, die bewirken, dass das Eindrehmoment des Grundkörpers 1 während der Implantation auf konstantem Niveau bleibt.

Das Schneidgewinde weist einen unteren Abschnitt 14 und einen oberen Abschnitt 15 auf, wobei der Kerndurchmesser bzw. der Gewindegrunddurchmesser des Schneidgewindes im unteren Abschnitt 14 kleiner ist als im oberen Abschnitt 15. Beispielsweise ist der Kerndurchmesser des Schneidgewindes im oberen Abschnitt 15 um 0,175 mm größer als im unteren Abschnitt 14. Gleichzeitig ist die Steigung des Schneidgewindes im oberen Abschnitt 15 kleiner als im unteren Abschnitt 14. Beispielsweise ist die Steigung im oberen Abschnitt 15 um 0,2 mm kleiner als im unteren Abschnitt 14. Bei dem dargestellten Ausführungsbeispiel beträgt der Abstand des Übergangs zwischen dem oberen Abschnitt 15 und dem unteren Abschnitt 14 von der Oberseite des Grundkörpers 1, d. h. von der Oberkante des Vorsprungs 7, etwa 2,5 mm. Die dargestellte Ausgestaltung des Schneidgewindes bewirkt eine optimale Primärstabilisierung des Implantats sowie eine Reduzierung von Druckkräften im Übergangsbereich zwischen spongiösem und kortikalem Knochen.

## Patentansprüche

1. Implantat zur Verankerung von Zahnersatz im Kiefer eines Patienten, mit einem Grundkörper (1) und einem an dessen Oberseite anschließenden Pfosten (2), wobei der Pfosten (2) form- und kraftschlüssig in eine Aufnahmeöffnung (3) des Grundkörpers (1) eingreift und mit diesem fest verbindbar ist, wobei an der Oberseite des Grundkörpers ein die Aufnahmeöffnung (3) umgebender Dichtungsbund (4) vorgesehen ist,
**dadurch gekennzeichnet,**
**dass** an der Oberseite des Grundkörpers (1) eine den Dichtungsbund (4) umgebende Ringnut (5) vorgesehen sind, wobei der Pfosten (2) an seiner dem Grundkörper (1) zugewandten Unterseite eine umlaufende Schulter (6) mit einer zu dem Dichtungsbund (4) und der Ringnut (5) komplementären Formgebung aufweist.

2. Implantat nach Anspruch 1, **dadurch gekennzeichnet, dass** der Dichtungsbund (4) in Längsrichtung des Implantats gesehen im Querschnitt stegförmig ausgebildet ist und eine axial verlaufende innere Wandung (8) und eine dazu im Wesentlichen parallele äußere Wandung (9) aufweist.

3. Implantat nach Anspruch 2, **dadurch gekennzeichnet, dass** der Dichtungsbund (4) an seiner Oberseite innenseitig und/oder außenseitig jeweils eine umlaufende Anfasung (11, 12) aufweist.

4. Implantat nach einem der Ansprüche 1 bis 3, **dadurch gekennzeichnet, dass** der Dichtungsbund (4) an seiner Stirnseite (10) flach ausgebildet ist.

5. Implantat nach einem der Ansprüche 1 bis 4, **dadurch gekennzeichnet, dass** die Ringnut (5) sich zu ihrem Grund hin verjüngt.

6. Implantat nach Anspruch 5, **dadurch gekennzeichnet, dass** die Ringnut (5) in Längsrichtung des Implantats gesehen sich zu ihrem Grund hin konisch verjüngend ausgebildet ist.

7. Implantat nach einem der Ansprüche 1 bis 6, **dadurch gekennzeichnet, dass** die Ringnut (5) an ihrem Grund flach ausgebildet ist.

8. Implantat nach einem der Ansprüche 1 bis 7, **dadurch gekennzeichnet, dass** der Grundkörper (1) an seiner dem Kieferknochen zugewandten äußeren Oberfläche ein Schneidgewinde aufweist.

9. Implantat nach Anspruch 8, **dadurch gekennzeichnet, dass** das Schneidgewinde einen unteren Abschnitt (14) und einen oberen Abschnitt (15) aufweist, wobei der Kerndurchmesser des Schneidgewindes im unteren Abschnitt (14) kleiner ist als im oberen Abschnitt (15) und wobei die Steigung des Schneidgewindes im unteren Abschnitt (14) größer ist als im oberen Abschnitt (15).

10. Implantat nach Anspruch 9, **dadurch gekennzeichnet, dass** der Abstand des Übergangs zwischen dem oberen und dem unteren Abschnitt (14, 15) des Schneidgewindes von der Oberseite des Grundkörpers (1) 2 bis 4 mm, vorzugsweise ca. 2,5 mm beträgt.

11. Implantat nach einem der Ansprüche 1 bis 10, **dadurch gekennzeichnet, dass** der Grundkörper (1) und/oder der Pfosten (2) aus Titan oder aus einer Titanlegierung bestehen.

12. Implantat nach einem der Ansprüche 1 bis 11, **dadurch gekennzeichnet, dass** der Grundkörper (1) und/oder der Pfosten (2) an der Außenseite mit Zirkonoxid beschichtet sind.

## Claims

1. An implant for anchoring a dental prosthesis in the jaw of a patient, having a base body (1) and a post (2) connecting to the top thereof, wherein the post (2) engages with a recess opening (3) of the base body (1) in a positive and non-positive manner and can be firmly connected thereto, a sealing collar (4) surrounding the recess opening (3) being provided on the top of the base body (1), **characterized in that** an annular groove (5) surrounding the sealing collar (4) is provided on the top of the base body (1), wherein the post (2) has a circumferential shoulder (6) on the bottom thereof facing the base body (1), the shoulder having a shape that is complementary to the sealing collar (4) and the annular groove (5).

2. The implant according to claim 1, **characterized in that** the sealing collar (4), when viewing in the longitudinal direction of the implant, is web-shaped in cross section and has an axially extending inner wall (8) and an outer wall (9) that is essentially parallel to the former.

3. The implant according to claim 2, **characterized in that** the sealing collar (4) is provided, at its top, with a circumferential bevel (11, 12) on the inside and/or the outside.

4. The implant according to any of the claims 1 through 3, **characterized in that** the sealing collar (4) is shaped flat at its front end (10).

5. The implant according to any of the claims 1 through 4, **characterized in that** the annular groove (5) is tapered toward its bottom.

6. The implant according to claim 5, **characterized in that** the annular groove (5), when viewing in the longitudinal direction of the implant, is conically tapered toward its bottom.

7. The implant according to any of the claims 1 through 6, **characterized in that** the annular groove (5) is shaped flat on its bottom.

8. The implant according to any of the claims 1 through 7, **characterized in that** the base body (1) has a self-cutting thread on its outer surface facing the jawbone.

9. The implant according to claim 8, **characterized in that** the self-cutting thread comprises a lower section (14) and an upper section (15), wherein the core diameter of the self-cutting thread is smaller in the lower section (14) than it is in the upper section (15) and wherein the pitch of the self-cutting thread is larger in the lower section (14) than it is in the upper section (15).

10. The implant according to claim 9, **characterized in that** the distance from the transition between the upper and lower sections (14, 15) of the self-cutting thread to the top of the base body (1) is 2 to 4 mm, preferably approx. 2.5 mm.

11. The implant according to any of the claims 1 through 10, **characterized in that** the base body (1) and/or the post (2) is/are made of titanium or a titanium alloy.

12. The implant according to any of the claims 1 through 11, **characterized in that** the base body (1) and/or the post (2) is/are externally coated with zirconium oxide.

## Revendications

1. Implant pour l'ancrage d'un substitut de dents dans la mâchoire d'un patient, avec un corps de base (1) et un montant (2) adjacent sur sa partie supérieure, le montant (2) s'emboîtant par complémentarité de forme et par force dans une ouverture de logement (3) du corps de base (1) et pouvant être relié avec celle-ci, un collet d'étanchéité (4) entourant l'ouverture de logement étant prévu sur le côté supérieur du corps de base, **caractérisé en ce que**, sur le côté supérieur du corps de base (1), une rainure annulaire (5) entourant le collet d'étanchéité (4) étant prévue, le montant (2) comprenant, au niveau de son côté inférieur orienté vers le corps de base (1), un épaulement circulaire (6) avec une forme complémentaire au collet d'étanchéité (4) et à la rainure annulaire (5).

2. Implant selon la revendication 1, **caractérisé en ce que** le collet d'étanchéité (4) présente, vu dans la direction longitudinale de l'implant, une section en forme de talon et comprend une paroi interne (8) qui s'étend axialement et une paroi externe (9) globalement parallèle.

3. Implant selon la revendication 2, **caractérisé en ce que** le collet d'étanchéité (4) comprend, au niveau de son côté supérieur, à l'intérieur et/ou à l'extérieur, un chanfrein circulaire (11, 12).

4. Implant selon l'une des revendications 1 à 3, **caractérisé en ce que** le collet d'étanchéité (4) est plat sur son côté frontal (10).

5. Implant selon l'une des revendications 1 à 4, **caractérisé en ce que** la rainure annulaire (5) se rétrécit vers sa base.

6. Implant selon la revendication 5, **caractérisé en ce que** la rainure annulaire (5) est conçue, vue dans la direction longitudinale de l'implant, avec un rétrécissement conique en direction de sa base.

7. Implant selon l'une des revendications 1 à 6, **caractérisé en ce que** la rainure annulaire (5) est plate au niveau de sa base.

8. Implant selon l'une des revendications 1 à 7, **caractérisé en ce que** le corps de base (1) comprend, au niveau de sa surface extérieure orientée vers l'os de la mâchoire, un filetage tranchant.

9. Implant selon la revendication 8, **caractérisé en ce que** le filetage tranchant comprend une partie inférieure (14) et une partie supérieure (15), le diamètre central du filetage tranchant étant inférieur, dans la partie inférieure (14), au diamètre dans la partie supérieure (15) et le pas du filetage tranchant étant, dans la partie inférieure (14), supérieure au pas dans la partie supérieure (15).

10. Implant selon la revendication 9, **caractérisé en ce que** la distance de transition entre la partie supérieure et la partie inférieure (14, 15) du filetage tranchant et le côté supérieur du corps de base (1) est de 2 à 4 mm, de préférence d'environ 2,5 mm.

11. Implant selon l'une des revendications 1 à 10, **caractérisé en ce que** le corps de base (1) et/ou le montant (2) sont constitués de titane ou d'un alliage de titane.

12. Implant selon l'une des revendications 1 à 11, **caractérisé en ce que** le corps de base (1) et/ou le montant (2) sont revêtus à l'extérieur d'oxyde de zirconium.
